# EUROPÄISCHE PATENTSCHRIFT

(11) **EP 1 077 519 B1**
(45) Veröffentlichungstag und Bekanntmachung des Hinweises auf die Patenterteilung: **26.10.2005**
(21) Anmeldenummer: 00111588.0
(22) Anmeldetag: 30.05.2000
(51) Int. Cl.: H02H 9/06

(54) **Verfahren zum Betreiben einer Überspannungsschutzeinrichtung sowie Überspannungsschutzeinrichtung mit mindestens einem Grobschutz- und einem Feinschutzelement**
Method of operating an overvoltage protection device and overvoltage protection device with at least one coarse and one fine protection element
Procédé de fonctionnement d'un dispositif de protection contre les surtensions et dispositif de protection contre les surtensions avec au moins un élément de protection grossier et un élément de protection fin

(30) Priorität: 17.08.1999 DE 19938953; 28.10.1999 DE 19952004
(43) Veröffentlichungstag der Anmeldung: 21.02.2001
(73) Patentinhaber: DEHN + SÖHNE GMBH + CO KG, D-92318 Neumarkt/Opf (DE)
(72) Erfinder: Hasse, Peter Dr.-Ing., 92318 Neumarkt (DE); Brocke, Ralph, Dr.-Ing., 98693 Ilmenau (DE); Pospiech, Jörg, Dipl.-Ing., 98693 Ilmenau (DE); Zahlmann, Peter, Dr.-Ing., 92318 Neumarkt (DE)
(74) Vertreter: Kruspig, Volkmar

(56) Entgegenhaltungen:
- EP-A- 0 933 860
- US-A- 4 683 514
- PATENT ABSTRACTS OF JAPAN vol. 014, no. 036 (E-877), 23. Januar 1990 (1990-01-23) & JP 01 268427 A (FUJI ELECTRIC CO LTD), 26. Oktober 1989 (1989-10-26)

## Beschreibung

Die Erfindung betrifft ein Verfahren zum Betreiben einer Überspannungsschutzeinrichtung, welche mindestens ein Grobschutzelement und ein Feinschutzelement enthält und wobei die Überspannungsschutzeinrichtung zwischen Energiequelle und Verbraucher geschaltet ist, sowie eine Überspannungsschutzeinrichtung gemäß Oberbegriff des Patentanspruchs 1 bzw. 4.

Bei einer Vielzahl von Anwendungsfällen insbesondere für Niederspannungsanlagen besteht die Notwendigkeit, einerseits einen möglichst niedrigen Schutzpegel bei andererseits gleichzeitig hohem Stoßstromableitvermögen zu gewährleisten. Dies wird üblicherweise aufgrund der technischen und physikalischen Randbedingungen der zur Verfügung stehenden Überspannungsschutzkomponenten durch die Kombination mehrerer, z.B. zweistufiger Ableiteranordnungen erreicht.

Dabei übernimmt eine erste Stufe den sogenannten Grobschutz, d.h. die Ableitung des großen Stoßstroms. Eine nachgeordnete zweite Stufe, nämlich der Feinschutz, kann aufgrund des geringeren Ableitvermögens nur die Reststörungen ableiten, letzterer stellt aber den gewünschten niedrigen Schutzpegel sicher. Demnach ergibt sich eine Funktionstrennung zwischen der Stufe zur Ableitung des Stoßstroms und der weiteren Stufe, die den eigentlichen Schutzpegel gewährleistet.

Als Ableiter der Grobschutzstufe werden in der Regel Funkenstrecken vorgesehen, die entsprechend den Anwendungsfällen ausgelegt sind. Insbesondere finden blitzstromtragfähige bzw. blitzstromtragfähige und folgestromlöschfähige Funkenstrecken Einsatz. Derartige konventionelle Funkenstrecken haben in der Regel jedoch einen sehr hohen Spannungsschutzpegel im Kilovoltbereich, der in Relation zur Spannungsfestigkeit der zu schützenden Geräte und Anlagen zu hoch ist. Deshalb wird eine weitere, d.h. die erwähnte Feinschutzstufe ausgebildet, die z.B. einen Varistor umfaßt. Diese Feinschutzstufe gewährleistet den gewünschten Schutzpegel für die Geräte und Anlagen. Ein Entkoppelelement zwischen den Stufen stellt sicher, daß jedes der Ableiterelemente nur so stark an der Ableitung des Stoßstroms beteiligt wird, wie es die jeweilige Bemessung vorgibt.

Anwendungsseitig ist es wünschenswert, daß Überspannungsschutzeinrichtungen nur im Moment der Überspannungsbegrenzung und -ableitung aktiv sind und in der übrigen Zeit keinerlei Wirkungen auf die zu schützenden Geräte und Anlagen zeigen. Auch während der eigentlichen Ableitung der Überspannung soll die Rückwirkung der Schutzgeräte auf das zu schützende System möglichst gering sein.

Bauelemente mit kontinuierlicher Strom-/Spannungscharakteristik wie Metalloxidvaristoren oder Suppressordioden sind ein bevorzugtes Mittel für den Feinschutz, da aufgrund der Impedanz nach Ansprechen und während des Ableitvorgangs es nicht zum Auftreten eines kurzschlußähnlichen Zustands kommen kann. Weiterhin besitzen derartige Bauelemente eine ideale Schutzkennlinie für nahezu jeden Spannungswert. Ein wesentlicher Nachteil derartiger Bauelemente liegt jedoch in der relativ geringen Stoßstromtragfähigkeit, die sich bedingt durch die Leitungsvorgänge im Halbleiter-Festkörper auch nicht wesentlich verbessern läßt.

Auf Funkenstrecken als Grobschutzelemente, die demgegenüber eine sehr große Stoßstromtragfähigkeit besitzen, wurde bereits hingewiesen.

Ein Nachteil derartigen Funkenstrecken ist jedoch das Auftreten eines kurzschlußähnlichen Zustands nach dem Ansprechen aufgrund der gegebenen diskontinuierlichen U/I-Charakteristik. In diesem Sinne ist eine Funkenstrecke quasi mit einem mechanischen Schalter vergleichbar. Die vorhandene geringe Impedanz verursacht einen unerwünschten Kurzschlußzustand, wobei weiterhin nachteilig ist, daß die Schutzkennlinie selbst nicht konstant, sondern eine Funktion der Steilheit der Überspannung ist. Der Wert der Begrenzungsspannung bei Funkenstrecken läßt sich ebenfalls nur mit hohem Aufwand beeinflussen.

Mit den eingangs erwähnten mehrstufigen Überspannungsschutzeinrichtungen gelingt, wenn auch nur in begrenztem Maße, eine Kombination der vorteilhaften Eigenschaften von Grobschutz- und Feinschutzelementen. Eine solche funktionstrennende Kombination ist beispielsweise aus der DE 38 12 058 A1 bekannt. Dort ist ein Entkopplungsglied in Form einer Induktität oder eines ohmschen Widerstands vorhanden. Die vorbekannte Anordnung realisiert aufgrund der Eigenimpedanz eine dem Impedanzverhältnis der Gesamtanordnung, d.h. der Impedanz der Ableiter bezüglich des Entkoppelelements entsprechende Aufteilung des Stoßstroms. Hierdurch soll eine gewisse energetische Koordination der vorhandenen Ableiterstufen erfolgen. Das Entkopplungsglied muß jedoch eine Reihe von Anforderungen erfüllen, die eine universelle Anwendung erschweren. Weiterhin geht die in der DE 38 12 058 A1 beschriebene Lösung davon aus, daß bei Überschreiten eines für den Feinschutzzweig definierten Stromscheitelwerts die Teilspannungen über einen Varistor und der erwähnten Impedanz gerade die Höhe der Funkenstrecken-Ansprechspannung erreichen, so daß diese dann zündet.

In eine ähnliche Zielrichtung gehen die Lösungen nach DE 196 40 997 A1, EP 0 186 939 A1 sowie JP 1-26 8427 gemäß dem Oberbegriff des Anspruchs 3, bei denen bei Überschreiten eines bestimmten Spannungswerts eine vorhandene Triggereinrichtung die Grobschutz-Funkenstrecke aktiviert. Den zitierten Lösungen ist jedoch der Nachteil gemeinsam, daß die Aktivierung der Funkenstrecke auf der Basis eines momentanen Spannungs- oder Stromwerts bzw. der Stromänderungsgeschwindigkeit erfolgt.

Eine relativ kurze und damit energieschwache Störung kann sowohl den gleichen Scheitelwert als auch die gleiche Anstieggeschwindigkeit wie eine energiereiche, langandauernde Überspannung besitzen. Damit tritt jedoch beim Stand der Technik das Problem auf, daß selbst bei energieschwachen Störungen, die an sich durch das Feinschutzelement selbst abgeleitet werden könnten, es zu einem Aktivieren der Funkenstrecke mit nachteiligem Elektrodenabbrand und Verschleiß selbiger kommt. Auch entstehen Belastungen des Verbrauchers durch relativ häufige Kurzschlüsse bedingt durch das Verhalten der zündenden Funkenstrecken bzw. Netzausfall. Aus vorliegenden Untersuchungen resultiert, daß über 90% der Überspannungsereignisse energiearm sind, allerdings einen hohen Spannungsscheitelwert besitzen, so daß nach neuen Ansätzen zu suchen ist, wie das unerwünschte Aktivieren des Grobschutzelemente vermieden werden kann.

Es wurde erkannt, daß die Faktoren Spannung und Strom bzw. di/dt kein Maß für die energetische Belastung des Feinschutzelements darstellen. Vielmehr ist es hier erforderlich, gemäß der Beziehung W = ∫ uidt die Zeitdauer der Einwirkung als wesentlichen Parameter zu berücksichtigen.

Aus dem Vorgenannten ist es daher Aufgabe der Erfindung, ein Verfahren zum Betreiben einer Überspannungsschutzeinrichtung sowie eine Überspannungsschutzeinrichtung anzugeben, welche mindestens ein Grobschutzelement und ein Feinschutzelement enthält und wobei die Überspannungsschutzeinrichtung zwischen Energiequelle und Verbraucher geschaltet ist. Aufgabengemäß soll die tatsächlich im Feinschutzelement umgesetzte Energie erfaßt und zum Steuern der Überspannungsschutzeinrichtung genutzt werden, so daß ausgeschlossen ist, daß kurze, energieschwache Störungen, die einen hohen Scheitelwert bzw. einen hohen Anstieg di nach dt besitzen, bereits die Funkenstrecke verschleißerhöhend aktivieren.

Die Lösung der Aufgabe der Erfindung erfolgt mit einem Verfahren, wie es mit dem Patentanspruch 1 definiert ist, sowie mit einer Überspannungsschutzeinrichtung gemäß den Merkmalen des Anspruchs 3, wobei die Unteransprüche mindestens zweckmäßige Ausgestaltungen und Weiterbildungen darstellen.

Erfindungsgemäß wird zur Ermittlung der tatsächlichen energetischen Belastung des Feinschutzelements oder der Feinschutzstufe ein Teilstrom aus dieser Stufe ausgekoppelt. Dieser gegebenfalls bewertete Teilstrom wird einer speziellen Funkenstrecke zugeführt, um dort eine Vorionisation zu bewirken. Über die Größe, aber auch die Art der Stromauskopplung und die Menge der gebildeten Ionen kann das Ansprechen und der Zeitpunkt der Zündung der Grobschutz-Funkenstrecke in Abhängigkeit von der Belastbarkeit des Feinschutzelements dann in einer überaschend einfachen Weise gesteuert werden.

Durch die Einstellbarkeit des vorionisierenden Hilfslichtbogens der Grobschutz-Funkenstrecke und der konstruktiven Auslegung der Funkenstrecke ist sichergestellt, daß das zunächst aktivierte Feinschutzelement im Rahmen seiner Belastbarkeit Spannungsspitzen und Ströme abbaut, ohne daß die Hauptfunkenstrecke gezündet wird, andererseits aber ist gewährleistet, daß das Feinschutzelement im Rahmen seiner Einsatzparameter zerstörungsfrei betrieben werden kann.

Durch die Wahl geringer Werte des ausgekoppelten Teilstroms und einer entsprechend gegebenen Ionisationsladungsmenge Qz der Hauptfunkenstrecke des Grobschutzelements wird das erwähnte unerwünschte Zünden bei kurzen Störungen auch großer Steilheit und Anstiegsgeschwindigkeit vermieden.

Die Funkenstrecke des Grobschutzelements besitzt eine Teilfunkenstrecke niedriger Ansprechspannung, welcher der Teilstrom aus der Feinschutzstufe zugeführt wird. Die gezündete Teilfunkenstrecke und der dort entstehende Lichtbogen setzt Ladungsträger frei, welche der Hauptfunken- oder einer weiteren Teilfunkenstrecke des Grobschutzelements, diese vorionisierend, zugeführt wird.

Die erste Teilfunkenstrecke bildet zusammen mit der Stromauskopplung aus dem Zweig des Feinschutzelements quasi eine Meßeinrichtung für die energetische Belastung. Der als abgezweigter Meßstrom zu betrachtende Stromfluß ionisiert dann über einen Hilfslichtbogen, der sich in der ersten Teilfunkenstrecke ausbildet, den Lichtbogenraum der zweiten oder Hauptfunkenstrecke.

Nach dem Zünden der Hauptfunkenstrecke übernimmt diese vollständig den Strom und entlastet die übrige Anordnung, d.h. das Feinschutzelement, welches in den AUS-Zustand übergeht. Die Entlastung wird bestimmt durch einstellbare Impedanzverhältnisse und/oder über die konkrete Dimensionierung der Funkenstrecke, die anordnungsgemäß bevorzugt als Dreielektroden-Funkenstrecke ausgebildet ist.

Die der zweiten oder Hauptfunkenstrecke zugeführte Menge an Ladungsträgern je Zeit ist proportional der im Feinschutzelement umgesetzten Ladung Q = i · t und stellt das gewünschte Abbild der energetischen Belastung des Feinschutzelements im Sinne einer Indikatorfunktion dar.

Der Teilstrom, welcher aus dem Feinschutzzweig abgeleitet wird, kann über lineare oder nichtlineare Impedanzen eingestellt und vorgegeben werden, wobei die Zeit als weitere Einflußgröße über die Stromflußdauer gegeben ist, welche der Einwirkzeit der momentanen Störung entspricht.

Die erforderlichen Ionisationsladungsmengen Qz zum Zünden der Grobschutz-Funkenstrecke werden durch deren Geometrieparameter festgelegt.

Bei gering gewähltem, ausgekoppelten Meßstrom ergibt sich aufgrund der Beziehung Qz = konstant, da diese eine konstruktionspezifische Größe ist, eine längere Stromflußdauer, bis die zum Zünden erforderliche Ladung Qz erreicht wird. Hierdurch ist es möglich, das Zünden der Funkenstrecke durch in der Dauer kurze Störimpulse zu unterdrücken. Derartige Impulse energieschwacher Störungen werden durch den Varistor oder ein ähnliches Feinschutzelement abgeleitet.

Erfolgt demgegenüber der Stromfluß durch die Vorionisationsfunkenstrecke relativ lang andauernd, wie dies bei energiestarker Störung, z.B. Blitz der Fall ist, dann zündet die Funkenstrecke, wenn die notwendige Ladungsmenge Qz eingebracht wurde.

Durch die Wahl des maximalen Ionisationsstroms, der einstellbar ist, läßt sich bei feststehender Zündladungsmenge Qz das Zeitfenster der Aktivierung der Hauptfunkenstrecke beliebig vorgeben.

Konkret besteht die Überspannungsschutzeinrichtung, die Grobschutz- und Feinschutzelemente enthält, aus einem Grobschutzelement in Form einer z.B. gekapselten Dreielektroden-Funkenstrecke, wobei die Elektroden zwei Funkenstrecken mit unterschiedlichen Zündspannungen bilden.
Die erste der zwei Funkenstrecken ist mit einem durch das Feinschutzelement fließenden Strom oder einem hieraus abgezweigten Teilstrom beaufschlagt. Die erste Funkenstrecke weist eine relativ niedrige Zündspannung auf, wodurch mit einsetzender frühzeitiger Zündung diese erste Funkenstrecke Ionen als Maß und Abbild für die energetische Belastung des Feinschutzelements freisetzt und diese der zweiten Funkenstrecken zugeführt werden. Diese zweite Funkenstrecke besitzt eine wesentlich höhere Ansprech- oder Zündspannung, wodurch in Abhängigkeit vom Verhältnis der sich ausbildenden Teillichtbögen der Funkenstrecken ein zeitversetztes und gesteuertes Zünden dieser erfolgen kann.

Zur Einstellung des Teilstroms ist zwischen dem Feinschutzelement mit einer gegebenen Impedanz Z₃ und der Elektrode der ersten Funkenstrecke eine erste Impedanz Z₁ vorgesehen, wobei am Knoten zwischen der ersten Impedanz Z₁ und dem Feinschutzelement eine zweite Impedanz Z₂ gegen Masse geschaltet ist. Durch Einstellung der Impedanzverhältnisse läßt sich nun die Steuerung des Zündverhaltens vorgeben.

In einer Ausführungsform kann die zweite Impedanz als Transformator ausgebildet sein, an dessen Primärkreis die erste Impedanz Z₁ angeschlossen ist und dessen Sekundärkreis den Wert der zweiten Impedanz Z₂ bestimmt.

Die Dreielektroden-Funkenstrecke ist so ausgebildet, daß die Abstände der Elektroden und/oder deren Durchmesser von Lichtbogenkammern zur Bildung unterschiedlicher Teillichtbögen der Teilfunkenstrecken in einem vorgegebenen Verhältnis liegen, welches im wesentlichen 1:10 beträgt.

Bei einer Wahl der Impedanz Z₂ mit einem Wert gegen 0 soll die erste Impedanz Z₁ im wesentlichen etwa das Zehnfache der Impedanz Z₃ des Feinschutzelements betragen. In dem Fall, wenn die zweite Impedanz Z₂ einen sehr großen Wert annimmt und hingegen die erste Impedanz Z₁ gegen 0 geht, erfolgt eine Steuerung allein über die Gestaltung der Teilfunkenstrecken, wobei hier die zweite Teilfunkenstrecke eine Ansprechspannung aufweisen soll, die wesentlich größer als die Ansprechspannung der ersten Teilfunkenstrecke ist.

Wie dargelegt, soll das Grobschutzelement mindestens zwei Teilfunkenstrecken aufweisen mit einer ersten Hilfsfunkenstrecke, die nach ihrer Zündung mittels der ionisierten Gase des Vorlichtbogens Ladungsträger produziert, die in die Hauptfunkenstrecke eingebracht werden, so daß letztere vorionisiert wird.
Die über die Vorionisation der Hilfsfunkenstrecke zündbare Hauptfunkenstrecke muß in der Lage sein, den gesamten Stoßstrom zu führen und abzuleiten.
Ein solches Verhalten läßt sich durch unterschiedliche Elektrodenabstände erreichen, so daß ein günstiges Verhältnis der Teillichtbögen mit optimaler Steuerwirkung für das zeitversetzte Zünden der Teilfunkenstrecken gegeben ist.
Speziell bei Funkenstreckenanordnungen mit ausgebildeten Lichtbogenkammern läßt sich ein ähnliches Verhalten durch eine Variation des Kammerdurchmessers erreichen.

Die Erfindung soll nachstehend anhand eines Ausführungsbeispiels sowie unter Zuhilfenahme von Figuren näher erläutert werden.

Hierbei zeigen:
- Fig. 1: eine prinzipielle Schaltungsvariante einer Überspannungsschutzeinrichtung mit Dreielektroden-Funkenstrecke;
- Fig. 2: ein Prinzipschaltbild mit einer Steuerung allein über die Ausbildung der Funkenstrecke und einer Impedanz Z₂ gegen ∞ bei Z₁ im Milliohm-Bereich;
- Fig. 3: eine Steuerung der Teillichtbögen über die Einstellung der Impedanzverhältnisse sowie einer Variante der Impedanz Z₂ unter Anwendung eines Transformators oder Übertragers;
- Fig. 4: ein Grobschutzelement in Form einer Dreielektroden-Funkenstrecke und
- Fig. 5: ein Grobschutzelement in Form von Lichtbogenkammern mit unterschiedlichem Kammerdurchmesser D₁ und D₂.

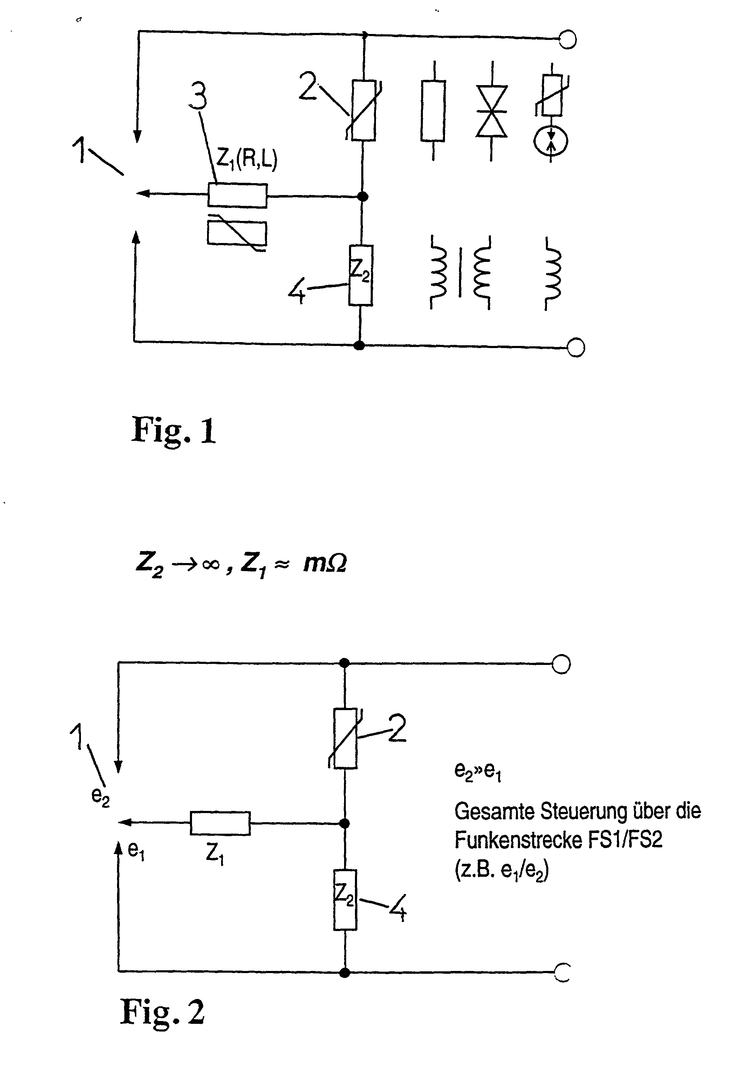

Die in der Fig. 1 gezeigte prinzipielle Schaltungsvariante geht von einer gestuften Überspannungsschutzeinrichtung mit Grobschutzelement 1 nach Art einer Dreielektroden-Funkenstrecke sowie einem parallel geschalteten Feinschutzelement 2 aus. Das Feinschutzelement 2 kann ein Varistor, ein ohmscher Widerstand, eine Suppressordiode oder ein ähnliches bekanntes Element sein, wie dies symbolhaft dargestellt ist.

Über eine Impedanz Z₁ (Bezugszeichen 3) in Form eines Widerstands oder einer Induktivität oder aber auch über einen Varistor kann der Dreielektroden-Funkenstrecke 1 als Grobschutzelement ein Vorionisationsstrom zugeführt werden. Die Impedanz Z₁ ist an einem Knotenpunkt einer Reihenschaltung von Feinschutzelement 2 mit einer zweiten Impedanz Z₂ (Bezugszeichen 4) angeschlossen. Die Überspannungsschutzeinrichtung wird in bekannter Weise in eine Niederspannungsanlage eingesetzt, wobei beide Stufen als einander parallelgeschaltene Leitungszweige zwischen Zuleitungen ausgebildet sind, die eine Energiequelle und einen Verbraucher miteinander verbinden.

Die Impedanz Z₂ kann als ohmscher Widerstand, aber auch als Transformator oder Übertrager bzw. reine Induktivität ausgebildet sein.

Bei einem gezeigten Beispiel nach Fig. 2 wird davon ausgegangen, daß die Impedanz Z₂ sehr hoch ist, hingegen Z₁ im Milliohmbereich liegt. In diesem Fall erfolgt eine Steuerung der Teillichtbögen der Dreielektroden-Funkenstrecke allein über deren geometrische Ausführung, wobei die Ansprechspannung e₁ wesentlich kleiner als die Ansprechspannung e₂ zu wählen ist.

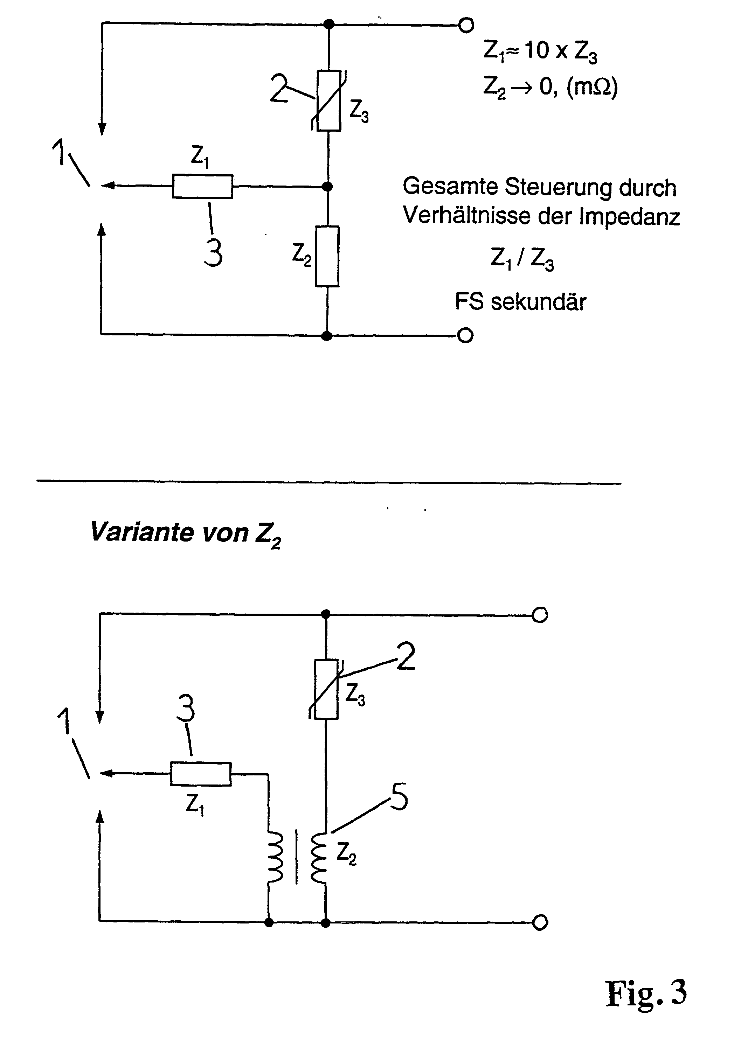

Bei einer Impedanzsteuerung nach Fig. 3 wird im Fall eines Werts Z₂ gegen 0, z.B. im mΩ-Bereich liegend, Z₁ so gewählt, daß diese etwa den zehnfachen Wert der Impedanz Z₃ des Feinschutzelements annimmt.

Die im unteren Teil der Fig. 3 gezeigte Ausführungsform stellt eine Variation der zweiten Impedanz Z₂ dar, welche einen Transformator 5 umfaßt. Im Primärkreis des Transformators 5 ist die erste Impedanz Z₁ angeschlossen, wobei der Sekundärkreis des Transformators 5 den Wert der zweiten Impedanz Z₂ bestimmt.

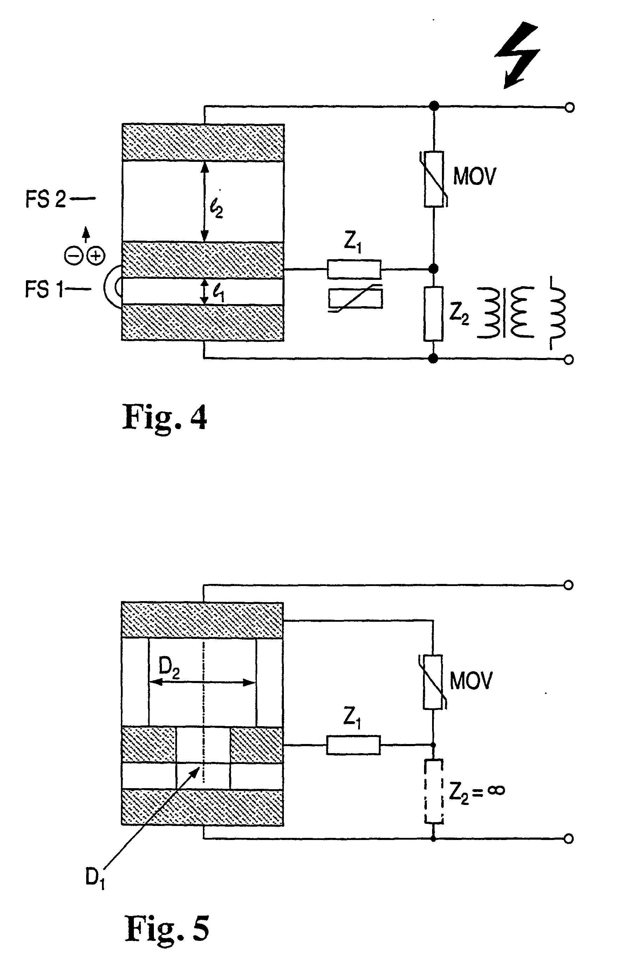

Bei der Dreielektroden-Funkenstrecke nach Fig. 4 werden zwei Teilfunkenstrecke FS1 und FS2 gebildet, wobei der Abstand der Elektroden für die Teilfunkenstrecke FS1, nämlich 11, wesentlich kleiner als der Abstand 12 zwischen den Elektroden der Teilfunkenstrecke FS2 ist. Die erste Impedanz Z₁ führt auf die zweite Elektrode der ersten Teilfunkenstrecke FS1. Im Fall eines Störimpulses fließt zunächst ein Strom durch das Feinschutzelement 2 mit einem resultierenden Teilstrom über die Impedanz Z₁ hin zur Elektrode der Teilfunkenstrecke FS1. Aufgrund einer entsprechend niedrigen Ansprech- oder Zündspannung zündet nun diese erste Teilfunkenstrecke FS1 und setzt Ladungsträger frei, welche der zweiten Teilfunkenstrecke FS2 zu deren Vorionisation zugeführt werden.

Das Verhältnis der Elektrodenabstände 11 und 12 beträgt bevorzugt etwa 1:10, so daß sich ein entsprechendes Verhältnis der Teillichtbögen mit optimierter Steuerwirkung und dem gewünschten zeitversetzten Zünden der Teilfunkenstrecken ergibt.

Die in der Teilfunkenstrecke FS1 erzeugten ionisierten Gase respektive der entstehende Vorlichtbogen produziert Ladungsträger, die ein Maß für die energetische Belastung des Feinschutzelements 2 darstellen. Nach Zünden der Hauptfunkenstrecke, welches über die Vorionisation erfolgt, übernimmt die Dreielektroden-Funkenstrecke den gesamten Stoßstrom, so daß im Fall entsprechend großer Störungen das Feinschutzelement 2 geschützt ist. Die erforderlichen Ionisationsladungsmengen Qz zum Zünden der Funkenstrecken werden durch die Geometrieparameter festgelegt, so daß sich entsprechende Möglichkeiten zur energetischen Koordination der Wirkungen bzw. des Ansprechens von Feinschutzelement und Grobschutzelement ergeben.

Bei der Variante nach Fig. 5 wird von einer Funkenstreckenanordnung mit Lichtbogenkammern ausgegangen, wobei die Einstellung des Ansprechverhaltens der Teilfunkenstrecken durch eine Variation des Kammerdurchmessers D₁ und D₂ gegeben ist. Beim Beispiel nach Fig. 5 ist vorausgesetzt, daß Z₂ einen sehr großen Wert annimmt, so daß sich eine Steuerungswirkung, wie zur Fig. 2 erläutert, ergibt.

Die Funkenstrecke FS1 bildet gemeinsam mit der Impedanz Z₁ bzw. dem Verhältnis der Impedanzen Z₁, Z₂ und den Eigenschaften des Feinschutzelements 2 ein Meßmittel, wobei der aus dem Strompfad des Feinschutzelements 2 abgezweigte Meßstrom einen Hilfslichtbogen in der Teilfunkenstrecke FS2 erzeigt, der wiederum den Lichtbogenraum der Teilfunkenstrecke FS2 vorionisiert. Der Ladungsträgerfluß von der Teilfunkenstrecke FS1 in den Raum der Teilfunkenstrecke FS2 vollzieht sich so lange, bis die Funkenstrecke durchzündet. Nach diesem vollständigen Zünden von FS2 übernimmt diese vollständig den Störstrom und entlastet in gewünschter Weise das Feinschutzelement, so daß dieses geschützt ist. Das Maß der Entlastung wird, wie beschrieben, durch die Impedanzverhältnisse in den Teilkreisen bestimmt und kann über deren Dimensionierung gesteuert werden.

Alles in allem gelingt es mit der vorliegenden Erfindung, ein Verfahren zum Betreiben einer Überspannungsschutzeinrichtung sowie eine solche Einrichtung anzugeben, die eine optimale Auslastung von Grobschutz- und Feinschutzelement dadurch ermöglicht, indem eine mittelbare Bestimmung der energetischen Belastung des Feinschutzelements oder der Feinschutzstufe erfolgt, so daß nur dann ein mit Verschleiß einhergehendes Auslösen der Grobschutz-Funkenstrecke eingeleitet wird, wenn ein Überschreiten der Schutzparameter des Feinschutzelements droht.

## Patentansprüche

1. Verfahren zum Betreiben einer Überspannungsschutzeinrichtung, welche mindestens ein Grobschutzelement und ein Feinschutzelement enthält und wobei die Überspannungsschutzeinrichtung zwischen Energiequelle und Verbraucher geschaltet ist, wobei zur mittelbaren Bestimmung der energetischen Belastung des Feinschutzelements oder der Feinschutzstufe ein Teilstrom aus der Feinschutzstufe ausgekoppelt wird, welcher eine Vorionisation des als Funkenstrecke ausgebildeten Grobschutzelements bewirkt, weiterhin über die Größe der Stromauskopplung das Ansprechen und der Zeitpunkt der Zündung der Funkenstrecke in Abhängigkeit von der Belastbarkeit des Feinschutzelements steuerbar ist und durch Vorgabe geringer Werte des ausgekoppelten Teilstroms und gegebener Ionisationsladungsmenge Qz der Funkenstrecke des Grobschutzelements ein unerwünschtes Zünden desselben bei kurzen Störimpulsen auch großer Steilheit und Anstiegsgeschwindigkeit unterbunden wird.

2. Verfahren nach Anspruch 1,
**dadurch gekennzeichnet, daß**
die Funkenstrecke des Grobschutzelements eine Teilfunkenstrecke niedriger Ansprechspannung aufweist, zu welcher der Teilstrom fließt, wobei die gezündete Teilfunkenstrecke Ladungsträger freisetzt, welcher einer Hauptfunkenstrecke des Grobschutzelements zur Vorionisation zugeführt wird.

3. Überspannungsschutzeinrichtung, welche mindestens ein Grobschutzelement und ein Feinschutzelement enthält und wobei die Überspannungsschutzeinrichtung zwischen Energiequelle und Verbraucher geschaltet ist,
wobei das Grobschutzelement eine Dreielektroden-Funkenstrecke ist, wobei die Elektroden zwei Funkenstrecken mit unterschiedlichen Zündspannungen bilden,
die erste der zwei Funkenstrecken mit einem durch das Feinschutzelement fließenden oder von diesem abgeleiteten Strom beaufschlagt ist und diese erste Funkenstrecke eine niedrige Zündspannung aufweist,
**dadurch gekennzeichnet, daß**
mit Zündung Ionen als Maß und Abbild für die energetische Belastung des Feinschutzelements freigesetzt und der zweiten der Funkenstrecken mit höherer Ansprechspannung zugeführt werden, wodurch in Abhängigkeit vom Verhältnis der sich ausbildenden Teillichtbögen ein zeitversetztes und gesteuertes Zünden der Teilfunkenstrecken erfolgt und hierfür zwischen dem Feinschutzelement mit einer gegebenen Impedanz Z₃ und der Elektrode der ersten Funkenstrecke eine erste Impedanz Z₁ vorgesehen ist, wobei am Knoten zwischen erster Impedanz Z₁ und der Elektrode der ersten Funkenstrecke eine zweite Impedanz Z₂ gegen Masse geschaltet ist und die Steuerung des Zündverhältnisses über das Impedanzververhältnis einstellbar ist.

4. Überspannungsschutzeinrichtung nach Anspruch 3,
**dadurch gekennzeichnet, daß**
die zweite Impedanz als Transformator ausgebildet ist, an dessen Primärkreis die erste Impedanz Z₁ angeschlossen ist und dessen Sekundärkreis den Wert der zweiten Impedanz Z₂ bestimmt.

5. Überspannungsschutzeinrichtung nach einem der Ansprüche 3 oder 4,
**dadurch gekennzeichnet, daß**
die Abstände der Elektroden und/oder der Durchmesser von Lichtbogenkammern der Funkenstrecke zur Bildung unterschiedlicher Teillichtbögen der Teilfunkenstrecken in einem vorgegebenen Verhältnis liegen, welches im wesentlichen 1:10 beträgt.

6. Überspannungsschutzeinrichtung nach Anspruch 3,
**dadurch gekennzeichnet, daß**
in dem Fall, wenn die Impedanz Z₂ gegen 0 geht, die Impedanz Z₁ ungefähr den zehnfachen Wert der Impedanz Z₃ beträgt.

7. Überspannungsschutzeinrichtung nach Anspruch 3,
**dadurch gekennzeichnet, daß**
bei einer sehr großen, gegen unendlich gehenden Impedanz Z₂ und einer Impedanz Z₁ gegen 0 gehend die zweite Teilfunkenstrecke eine wesentlich größere Ansprech- oder Zündspannung als die erste Teilfunkenstrecke aufweist.

## Claims

1. A method of operating an overvoltage protection device including at least one low-sensitivity protection element and one high-sensitivity protection element, and wherein the overvoltage protection device is connected between an energy source and a load, a partial current being withdrawn from the high-sensitivity stage for indirectly determining the energetic load upon the high-sensitivity element or the high-sensitivity stage, which partial current causes a pre-ionization of the low-sensitivity protection element configured as a spark gap, furthermore the response and timing of the spark gap striking being controllable by means of the amount of the withdrawn current in dependence of the load-bearing capacity of the high-sensitivity element, and by presetting low values for the withdrawn partial current and a given quantity of ionization charge Qz of the spark gap of the low-sensitivity element, an undesired striking of same is suppressed at short interference pulses even in case of a large slope and slew rate.

2. The method according to claim 1,
**characterized in that**
the low-sensitivity element spark gap has a partial spark gap of a low response voltage, to which partial spark gap the partial current flows, with the struck partial spark gap releasing charge-carriers, which partial current being fed to a main spark gap of the low-sensitivity protection element for pre-ionization.

3. An overvoltage protection device including at least one low-sensitivity protection element and one high-sensitivity protection element, and wherein the overvoltage protection device is connected between an energy source and a load, the low-sensitivity protection element being a three-electrode spark gap, the electrodes forming two spark gaps having different sparking potentials,
the first of the two spark gaps being acted upon by a current flowing through the high-sensitivity protection element or being discharged therefrom, and this first spark gap having a low sparking potential,
**characterized in that**
upon sparking, ions are released as a measure and representation of the energetic load upon the high-sensitivity protection element and are fed to the second of the spark gaps having a higher response voltage, whereby in dependence of the ratio of the developing partial arcs, a time-shifted and controlled sparking of the partial spark gaps takes place and a first impedance Z₁ being provided for this purpose between the high-sensitivity protection element having a given impedance Z₃ and the electrode of the first spark gap, a second impedance Z₂ being connected to ground at the node between the first impedance Z₁ and the electrode of the first spark gap, and the control of the sparking ratio being controllable by means of the impedance ratio.

4. The overvoltage protection device according to claim 3,
**characterized in that**
the second impedance is in the form of a transformer, the first impedance Z₁ being connected to the primary circuit thereof, and the secondary circuit thereof determining the value of the second impedance Z₂.

5. The overvoltage protection device according to any one of claims 3 or 4,
**characterized in that**
the distances of the electrodes and/or the diameter of arc chambers of the spark gap for forming different partial arcs from the partial spark gaps are within a predetermined ratio of essentially 1 : 10.

6. The overvoltage protection device according to claim 3,
**characterized in that**
when impedance Z₂ approaches 0, then impedance Z₁ has approximately the tenfold value of impedance Z₃.

7. The overvoltage protection device according to claim 3,
**characterized in that**
with a very large impedance Z₂ approaching infinity, and an impedance Z₁ approaching 0, the second partial spark gap has a substantially higher response and sparking potential than the first spark gap.

## Revendications

1. Procédé d'exploitation d'un dispositif de protection contre les surtensions qui contient au moins un élément de protection grossière et un élément de protection fine et dans lequel le dispositif de protection contre les surtensions est couplé entre une source d'énergie et un récepteur, dans lequel, pour la détermination indirecte de la charge énergétique de l'élément de protection fine ou de l'étage de protection fine, un courant partiel, qui provoque une pré-ionisation de l'élément de protection grossière réalisé comme éclateur à étincelles, est désaccouplé de l'étage de protection fine, et dans lequel en outre, par la valeur du courant découplé, l'intervention et l'instant de l'allumage de l'éclateur à étincelles peuvent être commandés en fonction de la charge que peut supporter l'élément de protection fine, et par sélection de valeurs faibles du courant partiel découplé et pour une quantité de charge d'ionisation (Qz) donnée de l'éclateur à étincelles de l'élément de protection grossière, un allumage indésirable de celui-ci est interdit dans le cas d'impulsions courtes de perturbation même avec une grande pente et une grande vitesse de croissance.

2. Procédé selon la revendication 1, **caractérisé en ce que** l'éclateur à étincelles de l'élément de protection grossière présente un éclateur à étincelles partiel de basse tension de réponse à laquelle circule le courant partiel, l'éclateur partiel à étincelles allumé libérant des supports de charge qui sont amenés pour la pré-ionisation à un éclateur principal à étincelles de l'élément de protection grossière.

3. Dispositif de protection contre les surtensions qui contient au moins un élément de protection grossière et un élément de protection fine et dans lequel le dispositif de protection contre les surtensions est couplé entre une source d'énergie et un récepteur, dans lequel l'élément de protection grossière est un éclateur à étincelles à trois électrodes, les électrodes formant deux éclateurs à étincelles avec des tensions d'allumage différentes,
le premier des deux éclateurs à étincelles étant parcouru par un courant circulant à travers l'élément de protection fine ou dérivé de celui-ci et ce premier éclateur à étincelles présentant une basse tension d'allumage,
**caractérisé en ce que**
au moment de l'allumage, des ions, qui constituent un critère et une représentation de la charge énergétique de l'élément de protection fine, sont libérés et envoyés au deuxième des éclateurs à étincelles avec une tension de réponse supérieure, ce qui fait qu'en fonction du rapport des arcs électriques partiels se formant il se produit un allumage décalé dans le temps et commandé des éclateurs à étincelles partiels, et pour cela une première impédance Z₁ est prévue entre l'élément de protection fine avec une impédance Z₃ donnée et l'électrode du premier éclateur à étincelles, une deuxième impédance Z₂ étant couplée à la masse sur le noeud entre la première impédance Z₁ et l'électrode du premier éclateur à étincelles, et la commande du rapport d'allumage étant réglable par le rapport des impédances.

4. Dispositif de protection contre les surtensions selon la revendication 3,
**caractérisé en ce que**
la deuxième impédance est réalisée comme transformateur au circuit primaire duquel est raccordée la première impédance Z₁ et dont le circuit secondaire détermine la valeur de la deuxième impédance Z₂.

5. Dispositif de protection contre les surtensions selon l'une des revendications 3 ou 4,
**caractérisé en ce que**
les distances des électrodes et/ou le diamètre des chambres des arcs électriques de l'éclateur à étincelles se situent dans un rapport prédéfini, qui est sensiblement de 1:10, pour former des arcs électriques partiels différents des éclateurs à étincelles.

6. Dispositif de protection contre les surtensions selon la revendication 3,
**caractérisé en ce que**
dans le cas dans lequel l'impédance Z₂ tend vers 0, l'impédance Z₁ est environ dix fois supérieure à la valeur de l'impédance Z₃.

7. Dispositif de protection contre les surtensions selon la revendication 3,
**caractérisé en ce que**
dans le cas d'une très grande impédance Z₂, tendant vers l'infini, et d'une impédance Z₁ tendant vers 0, le deuxième éclateur à étincelles présente une tension de réponse ou d'allumage sensiblement supérieure au premier éclateur à étincelles.
